# EUROPEAN PATENT APPLICATION

(11) **EP 4 783 384 A1**
(43) Date of publication of application: **29.07.2026**
(21) Application number: 26150572.1
(22) Date of filing: 07.01.2026
(51) Int. Cl.: H02B 1/20, H02B 1/32, H02B 1/38

(54) **POWER-FLEXIBLE PANELBOARD CABINET**

(30) Priority: 24.01.2025 US 202563749459 P; 29.10.2025 US 202519373691
(71) Applicant: Vertiv Corporation, Westerville, OH 43082 (US)
(72) Inventor: CALDWELL, Carl, Westerville, 43082 (US); STRAIN, Michael, Westerville, 43082 (US); VAN FOSSEN, John Nelson, Westerville, 43082 (US)
(74) Representative: Cousens, Nico

(57) **Abstract**

A power distribution panel (100) can include a cabinet (110), two or more breakers (120) at least partially disposed within the cabinet (110), and one or more busbars at least partially disposed within the cabinet (110). The busbars can include one or more line busbars (152), one or more neutral busbars (158), and one or more ground busbars (164). The breakers (120) and/or busbars can be selectively coupled to each other and/or selectively isolated from each other.

## Description

This application claims the benefit of U.S. Provisional Patent Application No. 63/749,459 filed January 24, 2025.

### TECHNICAL FIELD

The present disclosure relates generally to power distribution equipment and more specifically relates to power distribution cabinets for data centers.

### BACKGROUND

Data centers frequently have a variety of power distribution needs. For example, some data centers may utilize one incoming power supply circuit, while other data centers may utilize multiple incoming power supply circuits. For those data centers utilizing multiple incoming power supply circuits, it is often desirable for those circuits to remain isolated from one another. Accommodating such a variety of power distribution configurations typically requires the use of different power distribution cabinets.

### SUMMARY

Applicant has created new and useful devices, systems and methods for power distribution panels for data centers. In at least one embodiment, a power distribution panel according to the disclosure can advantageously accommodate one incoming power supply circuit and/or multiple, isolated incoming power supply circuits.

In at least one embodiment, a power distribution panel according to the disclosure can include a cabinet, two or more breakers at least partially disposed within the cabinet, one or more busbars at least partially disposed within the cabinet, or any combination thereof. In at least one embodiment, the busbars can include one or more line busbars, one or more neutral busbars, one or more ground busbars, or any combination thereof. In at least one embodiment, the breakers can be selectively coupled to each other and/or selectively isolated from each other.

In at least one embodiment, the breakers can include one or more main breakers coupled to the one or more line busbars. For example, in at least one embodiment, the breakers can include a first main breaker and a second main breaker, either or both of which can be coupled to the one or more line busbars. In at least one embodiment, the first main breaker and/or the second main breaker can be disposed above or below the one or more line busbars. In at least one embodiment, the breakers can include a first main breaker coupled to and/or disposed above the one or more line busbars and a second main breaker coupled to and/or disposed above the one or more line busbars. In at least one embodiment, the second main breaker can be vertically level with and/or horizontally offset from the first main breaker.

In at least one embodiment, the one or more line busbars can be or include a single bar electrically coupled to both the first main breaker and the second main breaker. In at least one embodiment, the one or more line busbars can be or include a first bar and a second bar. In at least one embodiment, the bars can be electrically isolated from each other. In at least one embodiment, the first bar can be electrically coupled to the first main breaker. In at least one embodiment, the second bar can be electrically coupled to the second main breaker. In at least one embodiment, a shield can be disposed between the first bar and the second bar and/or can electrically isolate the first bar from the second bar.

In at least one embodiment, the one or more line busbars can be or include three bars electrically isolated from each other, such as one for each of three phases. In at least one embodiment, each bar can be electrically coupled to both the first main breaker and the second main breaker.

In at least one embodiment, the one or more line busbars can be or include a first set of bars and a second set of bars. In at least one embodiment, each set of bars can be or include three bars electrically isolated from each other, such as one for each of three phases. In at least one embodiment, the first set of bars can be electrically coupled to the first main breaker. In at least one embodiment, the second set of bars can be electrically coupled to the second main breaker. In at least one embodiment, a shield can be disposed between the first set of bars and the second set of bars and/or can electrically isolate the first set of bars from the second set of bars.

In at least one embodiment, the one or more line busbars can be or include a single long bar (such as in the case of a single phase system) for selectively coupling to both the first main breaker and the second main breaker, a first short bar for selectively coupling to the first main breaker, a second short bar for selectively coupling to the second main breaker, or any combination thereof. In at least one embodiment, the one or more line busbars can be or include three long bars (such as in the case of a three phase system) for selectively coupling to both the first main breaker and the second main breaker, a first set of short bars for selectively coupling to the first main breaker, a second set of short bars for selectively coupling to the second main breaker, or any combination thereof. In at least one embodiment, the short bars can be electrically isolated from each other. In at least one embodiment, a shield can be disposed between the short bars and/or can electrically isolate the short bars from each other.

In at least one embodiment, the long bar(s) can be coupled to both the first main breaker and the second main breaker, such as for storage and/or shipping. If, in a particular installation for example, the first and second main breakers are to be electrically coupled, the long bar(s) can remain coupled to both. If, however, in a particular installation for example, the first and second main breakers are to be isolated, the long bar(s) can be uncoupled from the first main breaker and the second main breaker and replaced with the first short bar coupled to the first main breaker and the second short bar coupled to the second main breaker. The reverse is also possible, i.e., the short bars can be coupled with the first main breaker and the second main breaker, such as for storage and/or shipping, and replaced with the long bar(s) if desired for a particular installation.

In at least one embodiment, the breakers can include a third main breaker coupled to and/or disposed below the one or more line busbar. In at least one embodiment, the breakers can include a fourth main breaker coupled to and/or disposed below the one or more line busbar. In at least one embodiment, the fourth main breaker can be vertically level with and/or horizontally offset from the third main breaker. In at least one embodiment, the third main breaker can be electrically coupled to the first main breaker. In at least one embodiment, the fourth main breaker can be electrically coupled to the second main breaker.

In at least one embodiment, the breakers can include one or more distribution breakers coupled to the main breakers. In at least one embodiment, the breakers can include a first plurality of distribution breakers coupled to and/or disposed above the first main breaker, a second plurality of distribution breakers coupled to and/or disposed above the second main breaker, a third plurality of distribution breakers coupled to and/or disposed below the third main breaker, a fourth plurality of distribution breakers coupled to and/or disposed below the fourth main breaker, or any combination thereof.

In at least one embodiment, the one or more line busbars can be or include three bars electrically isolated from each other, such as one for each of three phases. In at least one embodiment, each bar can be electrically coupled to the first main breaker, the second main breaker, the third main breaker, the fourth main breaker, or any combination thereof.

In at least one embodiment, the one or more line busbars can be or include a first set of bars and a second set of bars. In at least one embodiment, each set of bars can be or include three bars electrically isolated from each other, such as one for each of three phases. In at least one embodiment, the first set of bars can be electrically coupled to the first main breaker and the third main breaker. In at least one embodiment, the second set of bars can be electrically coupled to the second main breaker and the fourth main breaker. In at least one embodiment, a shield can be disposed between the first set of bars and the second set of bars and/or can electrically isolate the first set of bars from the second set of bars.

In at least one embodiment, a power distribution panel can include a cabinet, a first breaker disposed within the cabinet, a second breaker disposed within the cabinet, a first busbar configured to selectively couple the first breaker and the second breaker in electrical communication with one another, and a second busbar configured to be selectively coupled to either the first breaker or the second breaker. The first busbar and the second busbar can be arranged to be selectively and alternatively installed into the cabinet. In at least one embodiment, a power distribution panel can include a third busbar arranged to be coupled to one of the first breaker and the second breaker, such as when the second busbar is coupled to the other of the first breaker and the second breaker. In at least one embodiment, a power distribution panel can include a shield arranged to be disposed at least partially within the cabinet with at least a portion of the shield disposed between the second busbar and the third busbar. In at least one embodiment, at least a portion of the shield can be an insulator.

### BRIEF DESCRIPTION OF THE DRAWINGS

FIG. 1 is a perspective view of one of many embodiments of a power distribution panel according to the disclosure, shown configured for top entry.
FIG. 2 is a perspective view of the power distribution panel of FIG. 1, shown configured for bottom entry.
FIG. 3 is a perspective view of a portion of the power distribution panel of FIG. 1, shown configured for bottom entry.
FIG. 4 is a perspective view of a portion of the power distribution panel of FIG. 1, shown configured for top entry.
FIG. 5 is a perspective view of one of many embodiments of a neutral busbar for use with a power distribution panel according to the disclosure, shown configured for top entry.
FIG. 6 is a perspective view of one of many embodiments of a ground busbar for use with a power distribution panel according to the disclosure.
FIG. 7 is a perspective view of a portion of the ground busbar of FIG. 6.
FIG. 8 is a perspective view of one of many embodiments of a portion of a power distribution panel according to the disclosure, shown with components in an operations position.
FIG. 9 is a perspective view of the portion of the power distribution panel of FIG. 8, shown with components in an installation position.
FIG. 10 is a perspective view of another of many embodiments of a portion of a power distribution panel according to the disclosure, shown with components in an operations position.
FIG. 11 is a perspective view of another of many embodiments of a portion of a power distribution panel according to the disclosure, shown with components in an installation position.
FIG. 12 is a front elevation view of another of many embodiments of a portion of a power distribution panel according to the disclosure, shown with components in an operations position.
FIG. 13 is a front elevation view of another of many embodiments of a portion of a power distribution panel according to the disclosure, shown with components in an installation position.
FIG. 14 is a perspective view of one of many embodiments of a power distribution panel according to the disclosure, shown with components in an installation position.
FIG. 15 is a perspective view of another of many embodiments of a portion of a power distribution panel according to the disclosure, shown with components isolated.
FIG. 16 is a perspective view of another of many embodiments of a portion of a power distribution panel according to the disclosure, shown with components electrically coupled.
FIG. 17 is a perspective view the portion of a power distribution panel of FIG. 16, shown with components isolated.
FIG. 18 is a perspective view of one of many embodiments of a set of busbars for use with a power distribution panel according to the disclosure.
FIG. 19 is a perspective view of one of many embodiments of a shield for use with a power distribution panel according to the disclosure.
FIG. 20 is a perspective view of another one of many embodiments of line busbars for use with a power distribution panel according to the disclosure.

### DETAILED DESCRIPTION

The figures described above and the written description of specific structures and functions below are not presented to limit the scope of what Applicant has invented or the scope of the appended claims. Rather, the figures and written description are provided to teach any person skilled in the art to make and use the inventions for which patent protection is sought. Those skilled in the art will appreciate that not all features of a commercial embodiment of the inventions are described or shown for the sake of clarity and understanding. Persons of skill in this art will also appreciate that the development of an actual commercial embodiment incorporating aspects of the present inventions will require numerous implementation-specific decisions to achieve the developer's ultimate goal for the commercial embodiment. Such implementation-specific decisions may include, and likely are not limited to, compliance with system-related, business-related, government-related and other constraints, which may vary by specific implementation, location and from time to time. While a developer's efforts might be complex and time-consuming in an absolute sense, such efforts would be, nevertheless, a routine undertaking for those of skill in this art having benefit of this disclosure. It must be understood that the inventions disclosed and taught herein are susceptible to numerous and various modifications and alternative forms.

The use of a singular term, such as, but not limited to, "a," is not intended as limiting of the number of items. Also, the use of relational terms, such as, but not limited to, "top," "bottom," "left," "right," "upper," "lower," "down," "up," "side," and the like are used in the written description for clarity in specific reference to the figures and are not intended to limit the scope of the inventions or the appended claims. The terms "including" and "such as" are illustrative and not limitative. Identifiers such as, but not limited to, "first," "second," "third," etc., are likewise used in the written description for clarity and are not intended to be limitative unless otherwise expressly indicated. The terms "couple," "coupled," "coupling," "coupler," and like terms are used broadly herein and can include any method or device for securing, binding, bonding, fastening, attaching, joining, inserting therein, forming thereon or therein, communicating, or otherwise associating, for example, mechanically, magnetically, electrically, chemically, operably, directly or indirectly with intermediate elements, one or more pieces of members together and can further include without limitation integrally forming one functional member with another in a unity fashion. The coupling can occur in any direction, including rotationally. Further, all parts and components of the disclosure that are capable of being physically embodied inherently include imaginary and real characteristics regardless of whether such characteristics are expressly described herein, including but not limited to characteristics such as axes, ends, inner and outer surfaces, interior spaces, tops, bottoms, sides, boundaries, dimensions (e.g., height, length, width, thickness), mass, weight, volume and density, among others.

Applicant has created new and useful devices, systems and methods for power distribution panels for data centers. In at least one embodiment, a power distribution panel according to the disclosure can advantageously accommodate one incoming power supply circuit and/or multiple, isolated incoming power supply circuits.

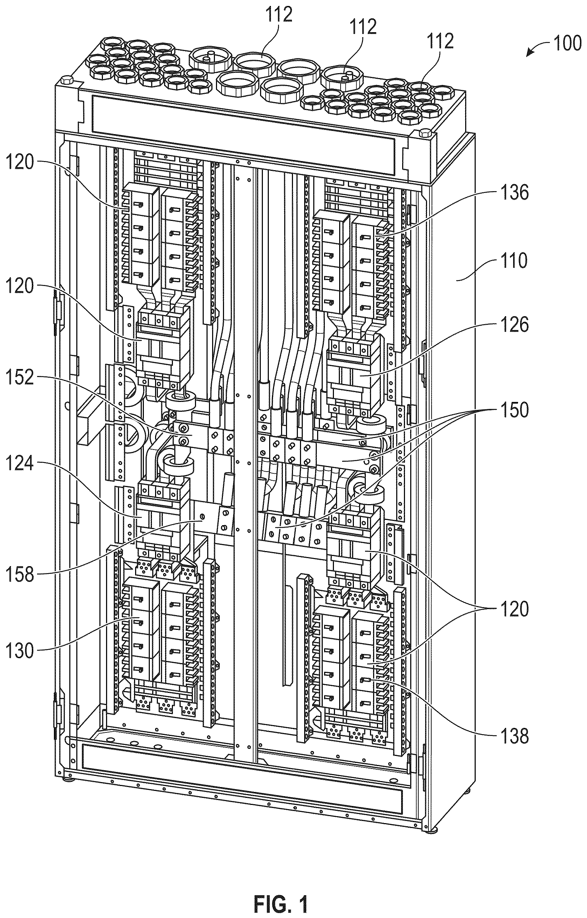

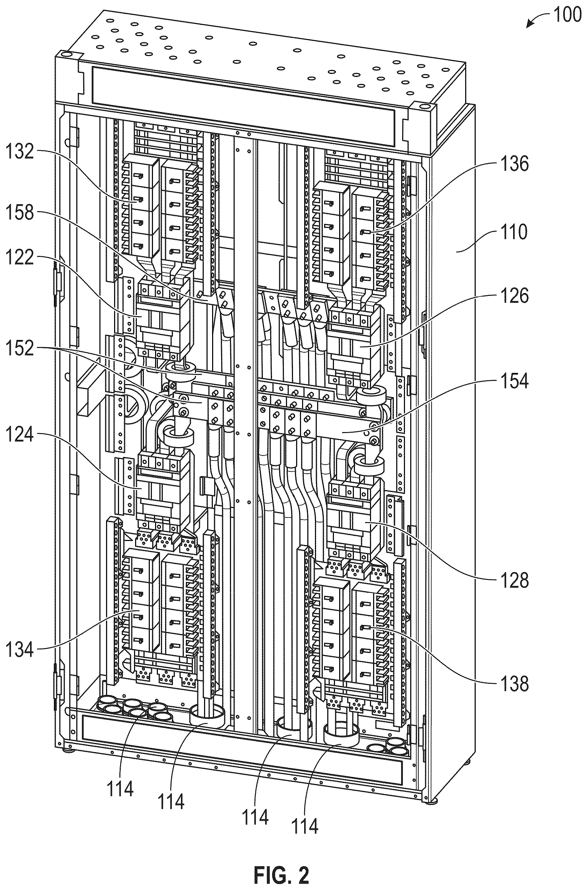

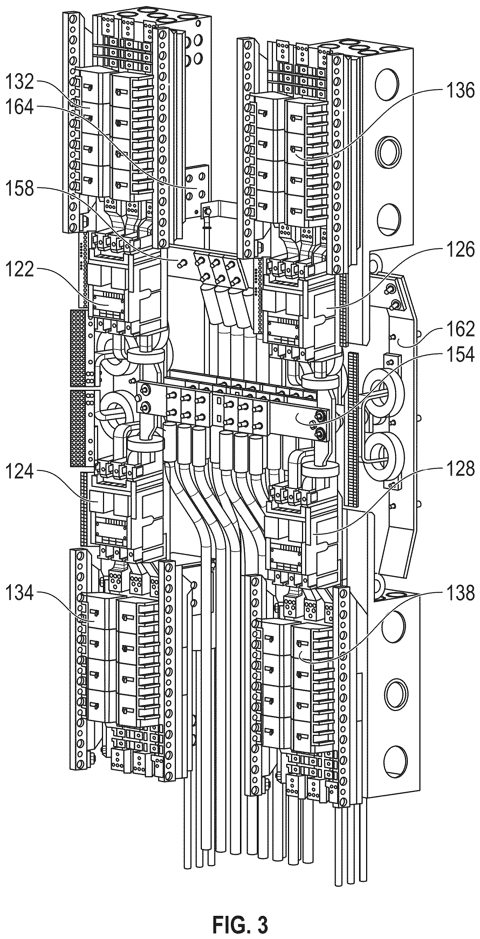

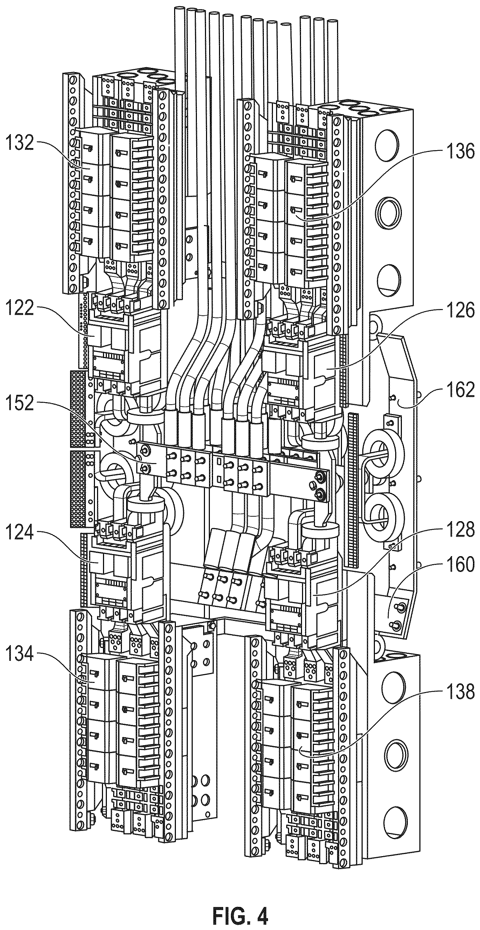

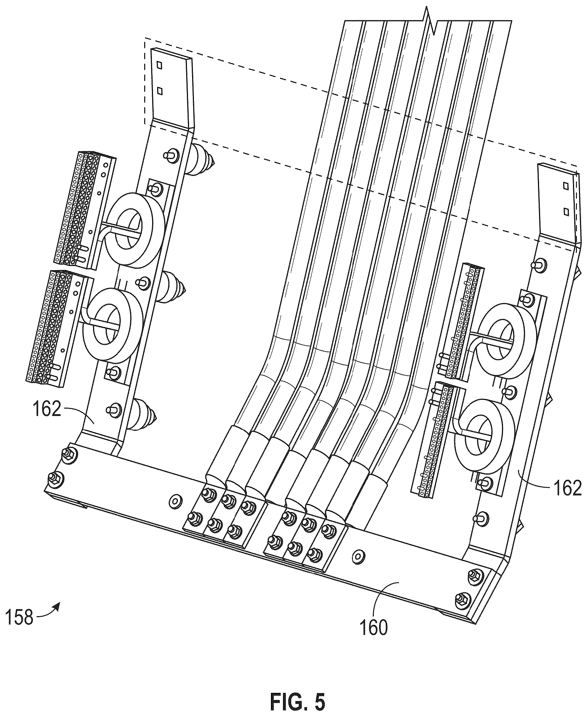

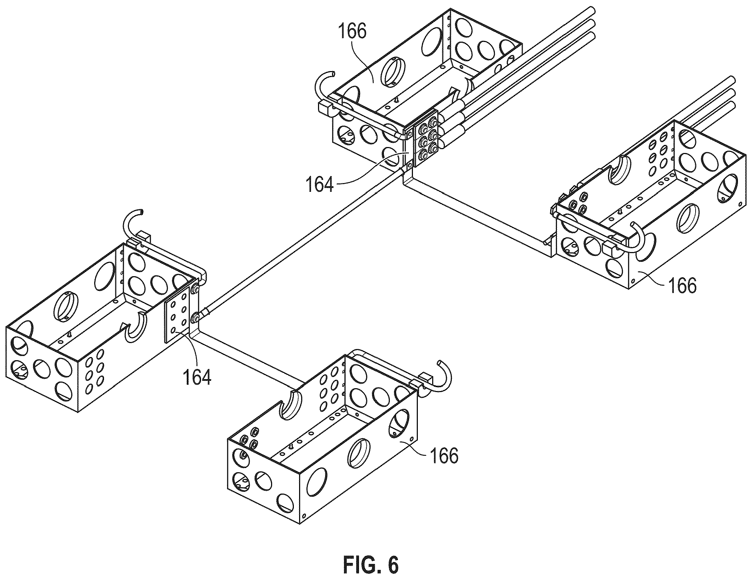

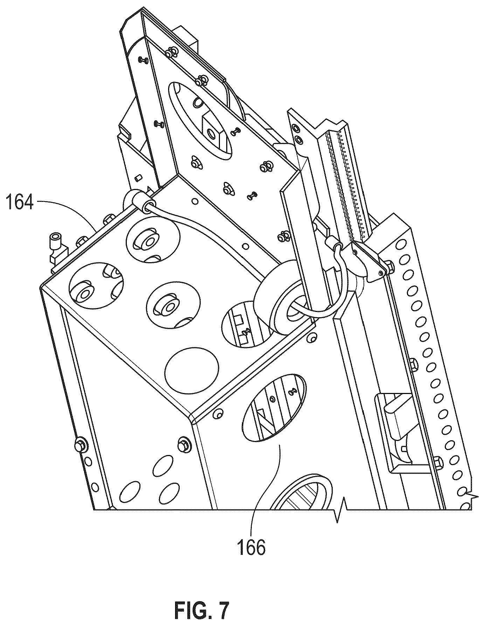

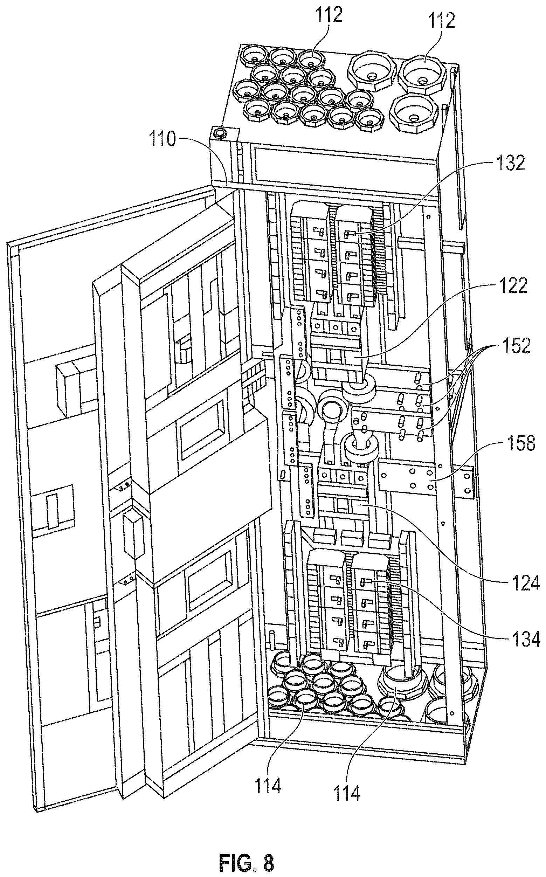

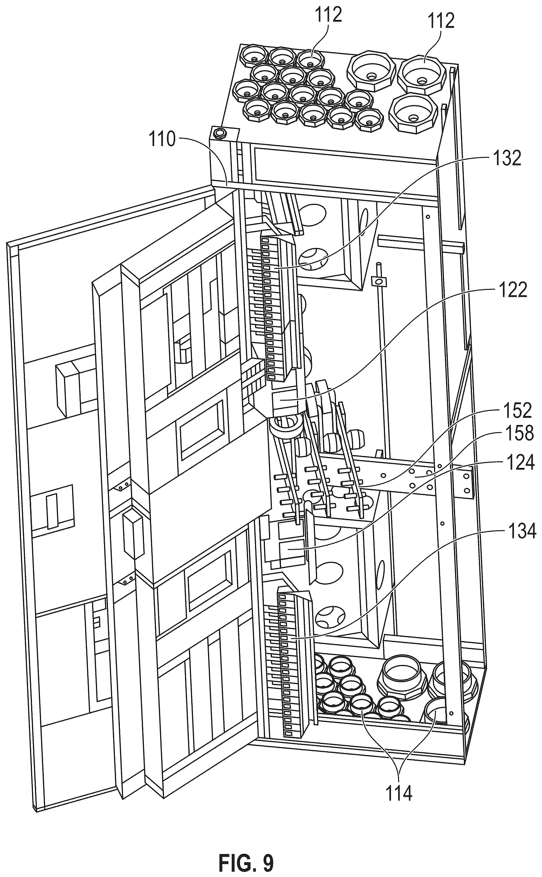

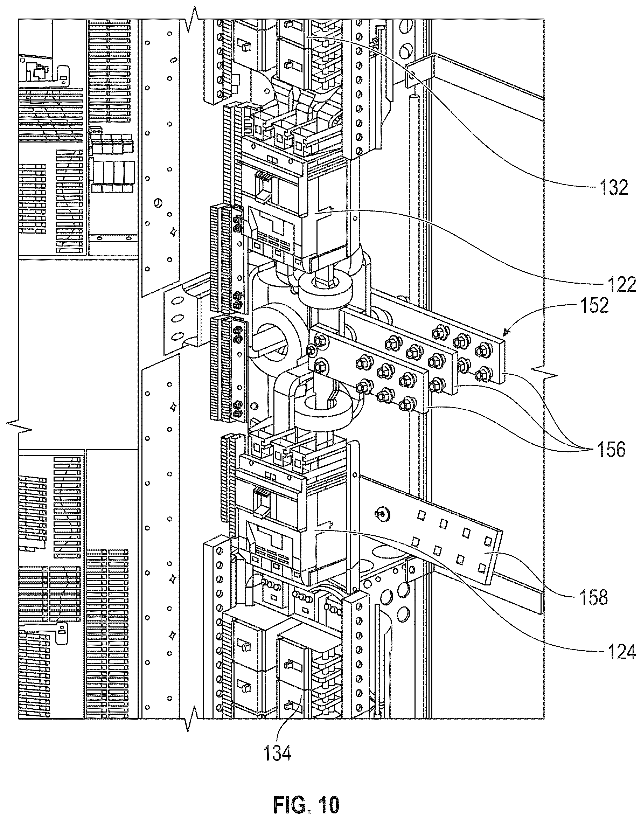

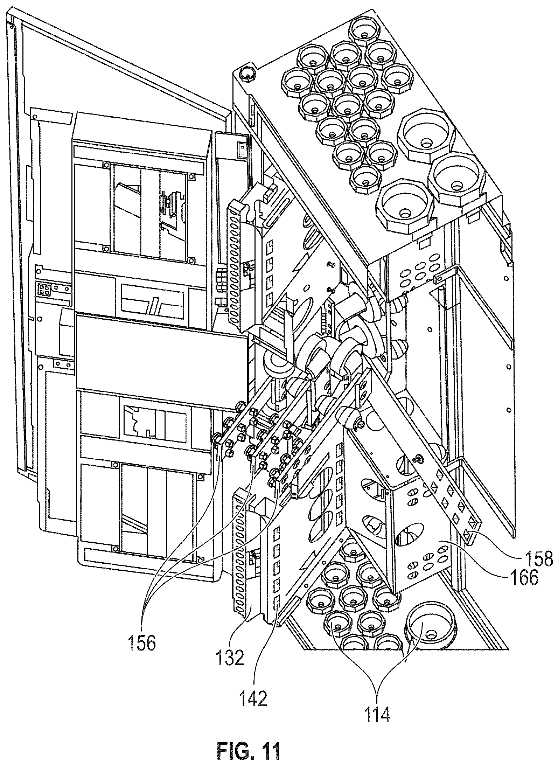

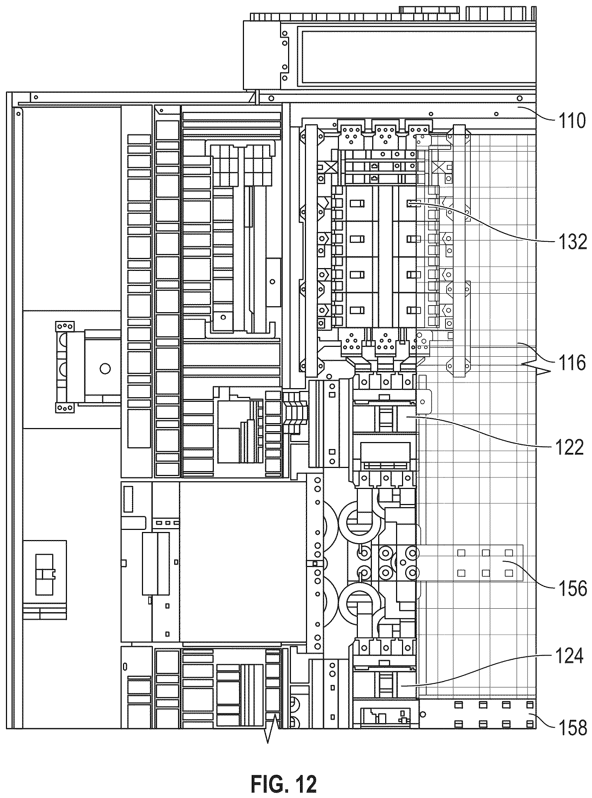

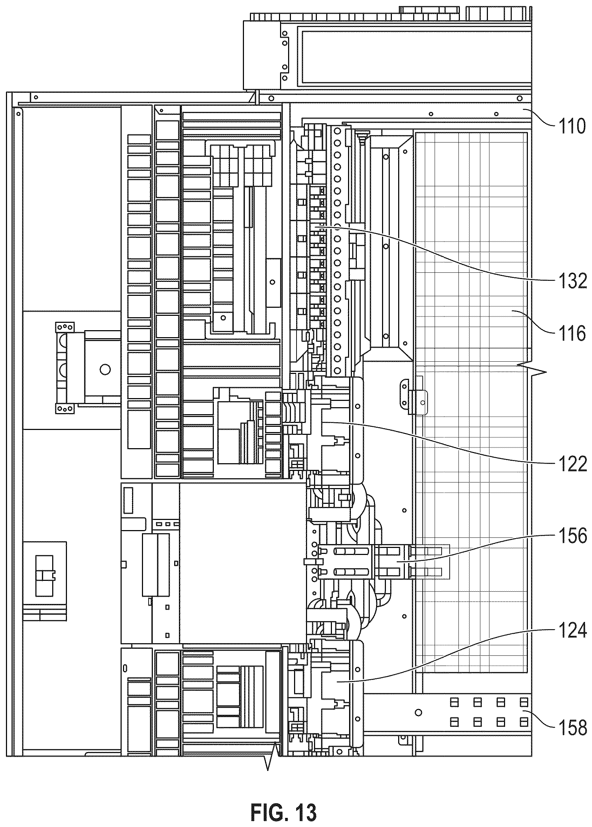

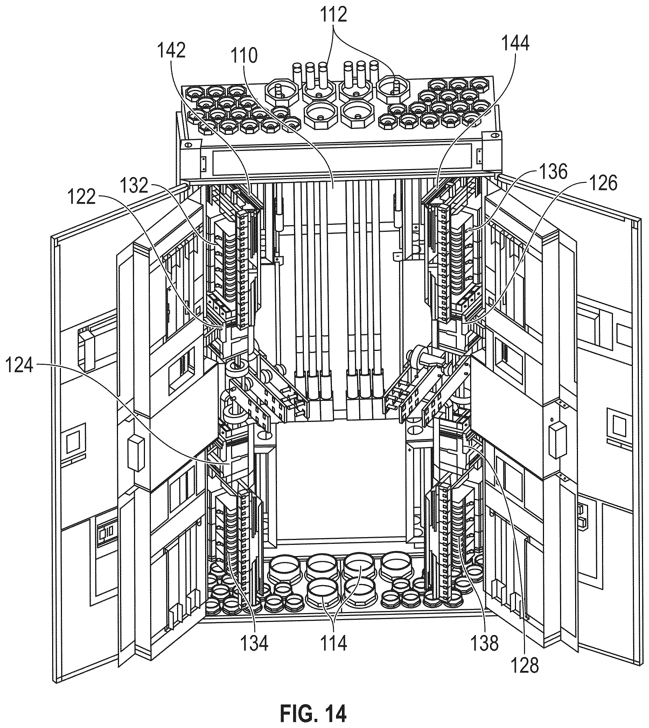

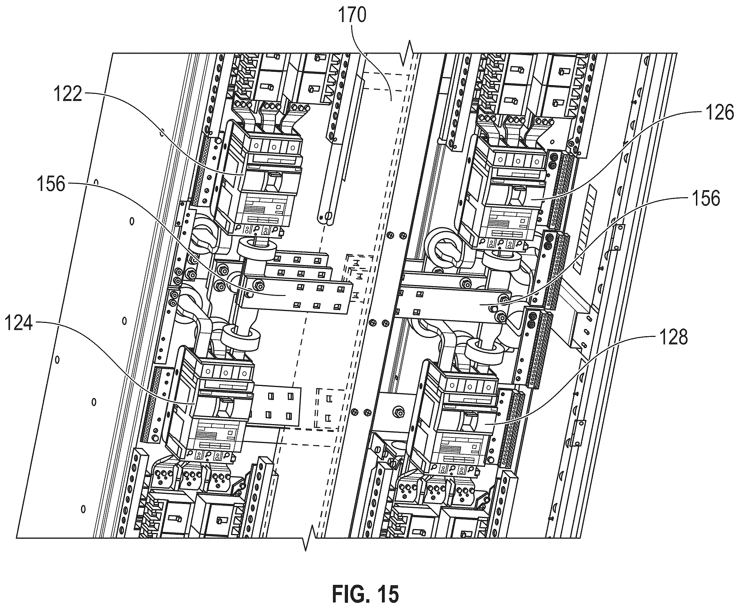

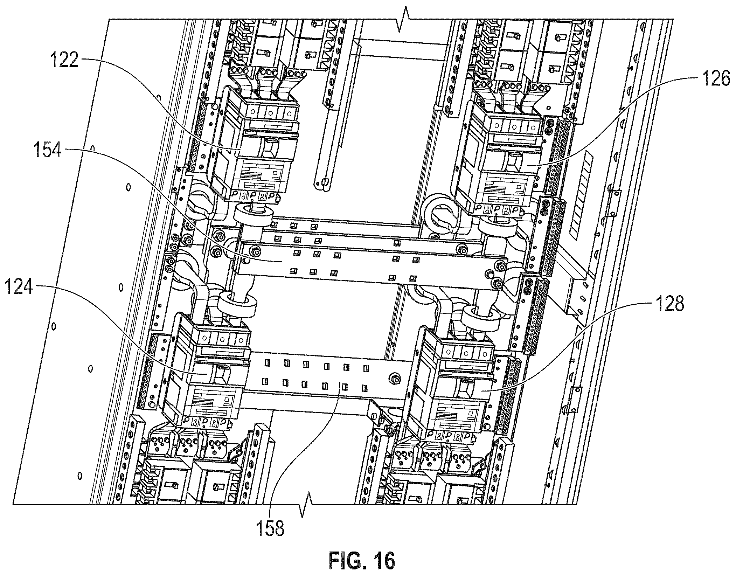

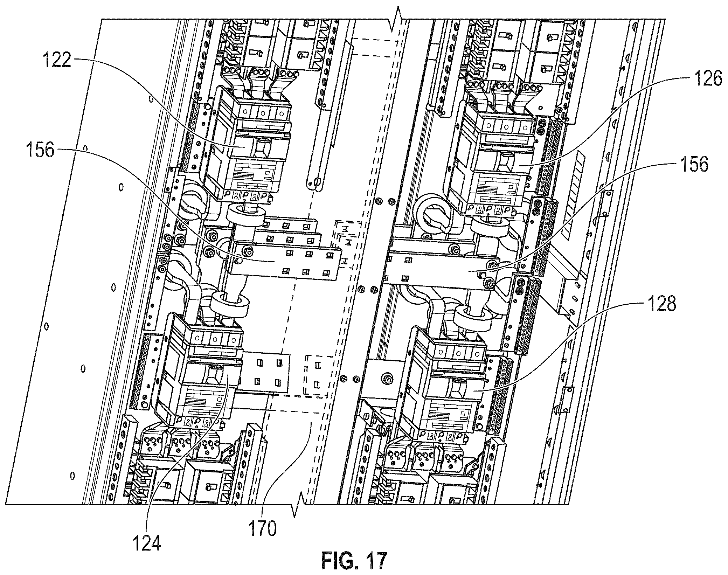

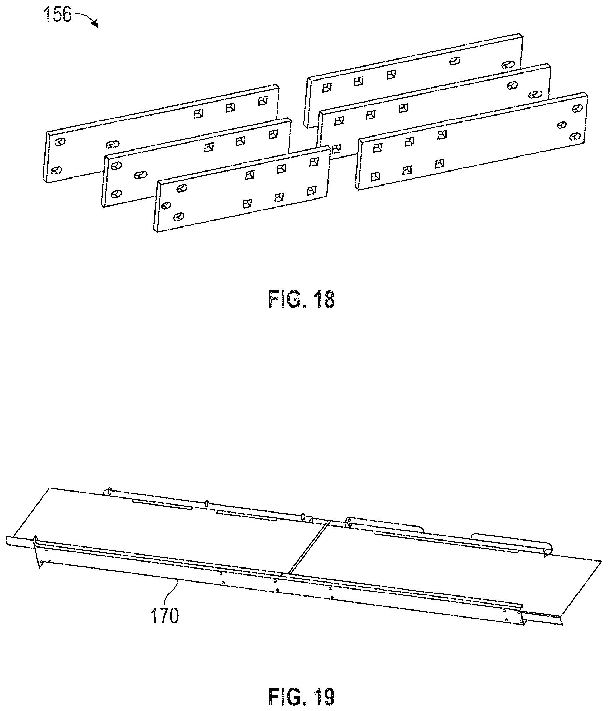

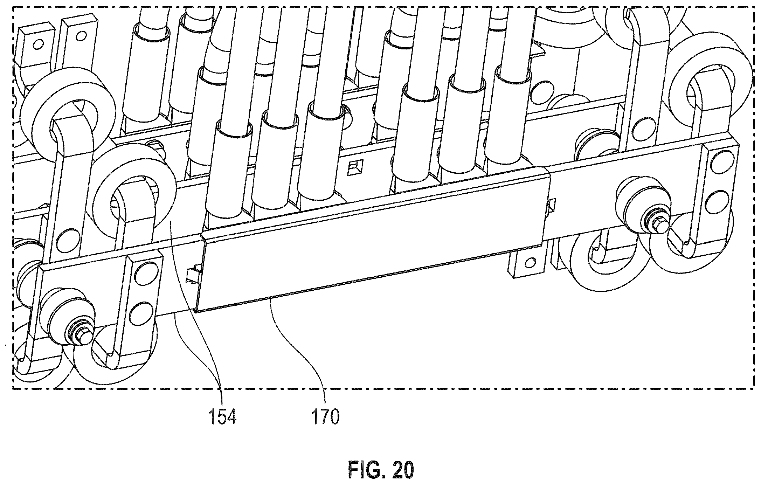

FIG. 1 is a perspective view of one of many embodiments of a power distribution panel according to the disclosure, shown configured for top entry. FIG. 2 is a perspective view of the power distribution panel of FIG. 1, shown configured for bottom entry. FIG. 3 is a perspective view of a portion of the power distribution panel of FIG. 1, shown configured for bottom entry. FIG. 4 is a perspective view of a portion of the power distribution panel of FIG. 1, shown configured for top entry. FIG. 5 is a perspective view of one of many embodiments of a neutral busbar for use with a power distribution panel according to the disclosure, shown configured for top entry. FIG. 6 is a perspective view of one of many embodiments of a ground busbar for use with a power distribution panel according to the disclosure. FIG. 7 is a perspective view of a portion of the ground busbar of FIG. 6. FIG. 8 is a perspective view of one of many embodiments of a portion of a power distribution panel according to the disclosure, shown with components in an operations position. FIG. 9 is a perspective view of the portion of the power distribution panel of FIG. 8, shown with components in an installation position. FIG. 10 is a perspective view of another of many embodiments of a portion of a power distribution panel according to the disclosure, shown with components in an operations position. FIG. 11 is a perspective view of another of many embodiments of a portion of a power distribution panel according to the disclosure, shown with components in an installation position. FIG. 12 is a front elevation view of another of many embodiments of a portion of a power distribution panel according to the disclosure, shown with components in an operations position. FIG. 13 is a front elevation view of another of many embodiments of a portion of a power distribution panel according to the disclosure, shown with components in an installation position. FIG. 14 is a perspective view of one of many embodiments of a power distribution panel according to the disclosure, shown with components in an installation position. FIG. 15 is a perspective view of another of many embodiments of a portion of a power distribution panel according to the disclosure, shown with components isolated. FIG. 16 is a perspective view of another of many embodiments of a portion of a power distribution panel according to the disclosure, shown with components electrically coupled. FIG. 17 is a perspective view the portion of a power distribution panel of FIG. 16, shown with components isolated. FIG. 18 is a perspective view of one of many embodiments of a set of busbars for use with a power distribution panel according to the disclosure. FIG. 19 is a perspective view of one of many embodiments of a shield for use with a power distribution panel according to the disclosure. FIG. 20 is a perspective view of another one of many embodiments of line busbars for use with a power distribution panel according to the disclosure. FIGS. 1-20 are described in conjunction with one another.

In at least one embodiment, a power distribution panel (or remote power panel) 100 according to the disclosure can include one or more cabinets 110 having a top and a bottom, one or more breakers 120 at least partially disposed within the cabinet 110, one or more busbars 150 at least partially disposed within the cabinet 110, or any combination thereof. In at least one embodiment, the top of the cabinet 110 can include one or more top cable entries 112 and/or the bottom of the cabinet 110 can include one or more bottom cable entries 114. In at least one embodiment, the busbars 150 can selectively receive one or more cables from the top of the cabinet 110, such as through the top cable entries 112, and/or from the bottom of the cabinet 110, such as through the bottom cable entries 114. In at least one embodiment, the busbars 150 can include one or more line busbars 152, one or more neutral busbars 158, one or more ground busbars 164, or any combination thereof.

In at least one embodiment, the breakers 120 can include one or more main breakers coupled to the line busbar(s) 152. For example, in at least one embodiment, the breakers 120 can include a first main breaker 122, a second main breaker 124, a third main breaker 126, and a fourth main breaker 128, any or all of which can be coupled to the line busbar 152 and/or coupled above or below the line busbar 152. In at least one embodiment, the breakers 120 can include a first main breaker 122 coupled to and/or disposed above the line busbar 152, a second main breaker 124 coupled to and/or disposed below the line busbar 152, a third main breaker 126 coupled to and/or disposed above the line busbar 152, and a fourth main breaker 128 coupled to and/or disposed below the line busbar 152.

In at least one embodiment, the first main breaker 122 can be coupled above the second main breaker 124 and/or the third main breaker 126 can be coupled above the fourth main breaker 128. In at least one embodiment, the third main breaker 126 can be vertically level with the first main breaker 122 and/or horizontally offset from the first main breaker 122. In at least one embodiment, the fourth main breaker 128 can be vertically level with the second main breaker 124 and/or horizontally offset from the second main breaker 124.

In at least one embodiment, the breakers 120 can include one or more distribution breakers 130 coupled to the main breakers 122, 124, 126, 128. In at least one embodiment, the breakers 120 can include a first plurality of distribution breakers 132 coupled to and/or disposed above the first main breaker 122, a second plurality of distribution breakers 134 coupled to and/or disposed below the second main breaker 124, a third plurality of distribution breakers 136 coupled to and/or disposed above the third main breaker 126, and a fourth plurality of distribution breakers 138 coupled to and/or disposed below the fourth main breaker 128. In at least one embodiment, the distribution breakers 130 can selectively distribute power to one or more components in the cabinet 110 and/or other cabinets in a data center.

In at least one embodiment, a power distribution panel 100 according to the disclosure can include one or more distribution rails (not shown) in addition to, or in place of, any of the breakers 120. In at least one embodiment, the distribution rails can couple the distribution breakers 130 to the main breakers 122, 124, 126, 128. In at least one embodiment, one or more feeder circuits, such as those for distributing power to one or more components in the cabinet 110 and/or other cabinets in a data center, can be coupled to the main breakers 122, 124, 126, 128 and/or the busbars 150, through or via the distribution rails and/or the distribution breakers 130.

In at least one embodiment, any or all of the breakers 120 and/or any or all of the busbars 150 can hingedly rotate between an installation position and an operations position. In at least one embodiment, any or all of the breakers 120 and/or any or all of the busbars 150 can be clear of a cable pulling area 116 within the cabinet 110, when in the installation position. In at least one embodiment, any or all of the breakers 120 and/or any or all of the busbars 150 can be at least partially disposed in the cable pulling area 116 when in the operations position. In at least one embodiment, any or all of the distribution rails can hingedly rotate between the installation position, in which they can be clear of the cable pulling area 116, and the operations position, in which they can be at least partially disposed in the cable pulling area 116.

In at least one embodiment, the first main breaker 122 can be rigidly coupled to the second main breaker 124. In at least one embodiment, the first main breaker 122 can rotate with the second main breaker 124. In at least one embodiment, the first main breaker 122 and/or the second main breaker 124 can be rigidly mounted to a backplane 142. In at least one embodiment, the backplane 142 can be at least partially disposed within the cabinet 110. In at least one embodiment, the backplane 142 can hingedly rotate between the installation position, in which the first main breaker 122 and/or the second main breaker 124 can be clear of the cable pulling area 116, and the operations position, in which the first main breaker 122 and/or the second main breaker 124 can be at least partially disposed in the cable pulling area 116. In at least one embodiment, the first plurality of distribution breakers 132 and/or the second plurality of distribution breakers 134 can be rigidly mounted to a backplane 142, which can be the same as or different from the backplane 142 to which the first main breaker 122 and/or the second main breaker 124 can be rigidly mounted.

In at least one embodiment, the third main breaker 126 can be rigidly coupled to the fourth main breaker 128. In at least one embodiment, the third main breaker 126 can rotate with the fourth main breaker 128, such as between an installation position, in which they can be clear of the cable pulling area 116, and an operations position, in which they can be at least partially disposed in the cable pulling area 116. In at least one embodiment, the third main breaker 126 and/or the fourth main breaker 128 can be rigidly mounted to a backplane 144, which can be the same as or different from the backplane 142 to which the first main breaker 122 and/or the second main breaker 124 can be rigidly mounted. In at least one embodiment, the backplane 144 can be at least partially disposed within the cabinet 110. In at least one embodiment, the backplane 144 can hingedly rotate between the installation position and the operations position. In at least one embodiment, the third plurality of distribution breakers 136 and/or the fourth plurality of distribution breakers 138 can be rigidly mounted to a backplane 144, which can be the same as or different from the backplane 144 to which the third main breaker 126 and/or fourth main breaker 128 can be rigidly mounted.

In at least one embodiment, the third main breaker 126 and/or the fourth main breaker 128 can be rigidly mounted to a second backplane 144, which can be different than the backplane 142 to which the first main breaker 122 and/or second main breaker 124 can be rigidly mounted. In at least one embodiment, a first backplane 142, to which the first main breaker 122 and/or second main breaker 124 can be rigidly mounted, can rotate in one direction and a second backplane 144, to which the third main breaker 126 and/or fourth main breaker 128 can be rigidly mounted, can rotate in a second direction. In at least one embodiment, the second direction can be opposite the first direction. In at least one embodiment, the first and second backplanes 142, 144 can rotate like double doors, such as opening to expose the cable pulling area 116 and/or closing to dispose the breakers 120 at least partially within the cable pulling area 116.

In at least one embodiment, the main breakers 122, 124, 126, 128 can be coplanar and/or at least partially within the cable pulling area 116, when the first backplane 142 is in a first operations position and the second backplane 144 is in a second operations position. In at least one embodiment, when the first backplane 142 is in a first installation position and the second backplane 144 is in a second installation position, the first main breaker 122 can be coplanar with the second main breaker 124, the third main breaker 126 can be coplanar with the fourth main breaker 128, the main breakers 122, 124, 126, 128 can be clear of the cable pulling area 116, or any combination thereof. In at least one embodiment, when the first backplane 142 is in the first installation position and/or the second backplane 144 is in the second installation position, the first main breaker 122 can be disposed at an angle with respect to the third main breaker 126 and/or the second main breaker 124 can be disposed at an angle with respect to the fourth main breaker 128.

In at least one embodiment, the line busbar 152 can selectively couple one or more incoming line cables to the breakers 120 and/or to each other. In at least one embodiment, the line busbar 152 can be or include one or more bars disposed horizontally within the cabinet 110. In at least one embodiment, the line busbar 152 can include three parallel line busbars 152 disposed horizontally within the cabinet 110, such as in the case of three-phase power. In at least one embodiment, the line busbar(s) 152 can be disposed horizontally in a middle of the cabinet 152 vertically, such as in a middle third or a middle fifth of the cabinet 152 vertically. In at least one embodiment, the line busbars 152 can be disposed in the middle of the cabinet 152 vertically and aligned parallel to one another, such as with one line busbar 152 closer to a rear of the cabinet 110, one line busbar 152 furthest from the rear of the cabinet 110, and one line busbar 152 between the other two line busbars 152.

In at least one embodiment, the breakers 120 can be selectively coupled to each other and/or selectively isolated from each other. In at least one embodiment, any or all of the main breakers 122, 124, 126, 128 can be selectively coupled to each other, such as through the line busbar(s) 152, and/or selectively isolated from each other. In at least one embodiment, any or all of the main breakers 122, 124, 126, 128 can have an individual rating, such as 400 amps or another applicable current rating. In at least one embodiment, electrically coupling two of the main breakers 122, 124, 126, 128 can double the individual rating. In at least one embodiment, electrically coupling four of the main breakers 122, 124, 126, 128 can quadruple the individual rating.

In at least one embodiment, the first main breaker 122 and the second main breaker 124 can be coupled to one another through one or more through the line busbars 152, providing double the individual rating of the first and second main breakers 122, 124 and/or the third main breaker 126 and the fourth main breaker 128 can be coupled to one another through one or more through the line busbars 152, providing double the individual rating of the third and fourth main breakers 126, 128. In at least one embodiment, the line busbar(s) 152 coupling the first main breaker 122 and the second main breaker 124 can be selectively isolated from the line busbar(s) 152 coupling the third main breaker 126 and the fourth main breaker 128, providing two isolated circuits each with double the individual rating of the main breakers 122, 124, 126, 128 (e.g., 800 amps). In at least one embodiment, the line busbar(s) 152 coupling the first main breaker 122 and the second main breaker 124 can be selectively coupled to (which can include being formed integrally with) and/or the same as the line busbar(s) 152 coupling the third main breaker 126 and the fourth main breaker 128, such as for providing a single circuit having quadruple the individual rating of the main breakers 122, 124, 126, 128 (e.g., 1600 amps).

In at least one embodiment, the line busbar(s) 152 can be or include one or more long bars 154 electrically coupled to any or all of the main breakers 122, 124, 126, 128. In at least one embodiment, such as in a single-phase system, the line busbar(s) 152 can be or include a single long bar 154 electrically coupled to both the first main breaker 122 and the third main breaker 126. In at least one embodiment, such as in a three-phase system, the line busbar(s) 152 can be or include three long bars 154 electrically coupled to both the first main breaker 122 and the third main breaker 126. In at least one embodiment, the three long bars 154, such as one for each of three phases, can be electrically isolated from each other. In at least one embodiment, each of the three long bars 154 can be electrically coupled to both the first main breaker 122 and the third main breaker 126. In at least one embodiment, each of the three long bars 154 can be electrically coupled to any or all of the main breakers 122, 124, 126, 128.

In at least one embodiment, the line busbar(s) 152 can be or include one or more short bars 156 electrically coupled to any of the main breakers 122, 124, 126, 128. In at least one embodiment, the line busbar(s) 152 can be or include a first short bar 156 and a second short bar 156. In at least one embodiment, the short bars 156 can be electrically isolated from each other. In at least one embodiment, the first short bar 156 can be electrically coupled to the first main breaker 122 and/or the second main breaker 124. In at least one embodiment, the second short bar 156 can be electrically coupled to the third main breaker 126 and/or the fourth main breaker 128. In at least one embodiment, a shield 170, such as an insulator or nonconductive structure, can be disposed between the first short bar 156 and the second short bar 156 and/or can electrically isolate the first short bar 156 from the second short bar 156.

In at least one embodiment, such as in a three-phase system, the line busbars 152 can be or include a first set of short bars 156 and a second set of short bars 156. In at least one embodiment, each set of short bars 156 can be or include three bars, such as one for each of three phases, electrically isolated from each other. In at least one embodiment, the first set of short bars 156 can be electrically coupled to the first main breaker 122 and/or the second main breaker 124. In at least one embodiment, the second set of short bars 156 can be electrically coupled to the third main breaker 126 and/or the fourth main breaker 128. In at least one embodiment, a shield 170 can be disposed between the first set of short bars 156 and the second set of short bars 156 and/or can electrically isolate the first set of short bars 156 from the second set of short bars 156.

In at least one embodiment, the line busbars 152 can be or include a single long bar 154 (such as in the case of a single phase system) for selectively coupling to any or all of the main breakers 122, 124, 126, 128, a first short bar 156 for selectively coupling to the first main breaker 122 and/or the second main breaker 124, a second short bar 156 for selectively coupling to the third main breaker 126 and/or the fourth main breaker 128, a shield 170 for selectively isolating the first short bar 156 from the second short bar 156, or any combination thereof. In at least one embodiment, the line busbars 152 can be or include three long bars 154 (such as in the case of a three phase system) for selectively coupling to any or all of the main breakers 122, 124, 126, 128, a first set of short bars 156 for selectively coupling to the first main breaker 122 and/or the second main breaker 124, a second set of short bars 156 for selectively coupling to the third main breaker 126 and/or the fourth main breaker 128, a shield 170 for selectively isolating the short bars 156 from each other, or any combination thereof. In at least one embodiment, any or all of the short bars 156 can be electrically isolated from each other, such as by one or more shields 170 and/or one or more air gaps. In at least one embodiment, the shield 170 can be disposed between the short bars 156, or sets of short bars 156, and/or can electrically isolate the short bars 156, or sets of short bars 156, from each other.

In at least one embodiment, the long bar(s) 154 can be coupled to any or all of the main breakers 122, 124, 126, 128, such as for storage and/or shipping. In at least one embodiment, the long bar(s) 154 can be coupled to both the first main breaker 122 and the third main breaker 126, such as for storage and/or shipping. If, in a particular installation for example, the first and third main breakers 122, 126 are to be electrically coupled, the long bar(s) 154 can remain coupled to both. If, however, in a particular installation for example, the first and third main breakers 122, 126 are to be isolated, the long bar(s) 154 can be uncoupled from the first main breaker 122 and the third main breaker 126 and replaced with the first short bar 156, or first set of short bars 156, coupled to the first main breaker 122 and/or second main breaker 124 and the second short bar 156, or second set of short bars 156, coupled to the third main breaker 126 and/or fourth main breaker 128. The reverse is also possible, i.e., the short bars 156 can be coupled with the first main breaker 122 and the third main breaker 128, isolating the first main breaker 122 and/or the second main breaker 124 from the third main breaker 128 and/or the fourth main breaker 128 (such as for storage and/or shipping), and replaced with the long bar(s) 154 if coupling the main breakers 122, 124, 126, 128 is desired for a particular installation.

In at least one embodiment, the first short bar 156, or the first set of short bars 156, can be coupled to the first main breaker 122 and/or the second main breaker 124 and the second short bar 156, or the second set of short bars 156, can be coupled to the third main breaker 128 and/or the fourth main breaker 128, with the shield 170 installed therebetween (such as for storage and/or shipping). If coupling the main breakers 122, 124, 126, 128 is desired for a particular installation, the shield 170 can be removed and the long bar(s) 154 can be coupled to the short bar(s) 156, leaving both the long bar(s) 154 and the short bar(s) 156 in place.

In at least one embodiment, the neutral busbar 158 can selectively couple one or more incoming neutral cables to the cabinet 110 and/or each other. In at least one embodiment, the neutral busbar 158 can be disposed horizontally within the cabinet 110, such as in the middle third of the cabinet 110 vertically. In at least one embodiment, the neutral busbar 158 can be selectively disposed parallel to the line busbar 152. In at least one embodiment, the neutral busbar 158 can be selectively disposed above or below the line busbar 152. In at least one embodiment, the neutral busbar 158 can be selectively disposed parallel to and above the line busbar 152. In at least one embodiment, the neutral busbar 158 can be selectively disposed parallel to and below the line busbar 152.

In at least one embodiment, the neutral busbar 158 can be moved from above the line busbar 152 to below the line busbar 152, and/or vice versa. For example, the neutral busbar 158 can be disposed above or below the line busbar 152, depending on where and/or how the cables enter the cabinet 110 in accordance with a given implementation of the disclosure. In at least one embodiment, the neutral busbar 158 can be disposed above the line busbar 152 when the cables enter the bottom of the cabinet 110 and/or can be disposed below the line busbar 152 when the cables enter the top of the cabinet 110. In at least one embodiment, the neutral busbar 158 can be disposed below the line busbar 152 when the cables enter the bottom of the cabinet 110 and/or can be disposed above the line busbar 152 when the cables enter the top of the cabinet 110.

In at least one embodiment, the neutral busbar 158 can include one or more horizontal bars 160 and two or more vertical supports 162. In at least one embodiment, the horizontal bar 160 can be selectively coupled to a top of the vertical supports 162 and/or to a bottom of the vertical supports 162, such as depending on where and/or how the cables enter the cabinet 110. In at least one embodiment, the vertical supports 162 can span above and below the line busbar(s) 152. In at least one embodiment, the horizontal bar 160 can be selectively coupled to the vertical supports 162 above the line busbar 152 and/or selectively coupled to the vertical supports 162 below the line busbar 152.

In at least one embodiment, the horizontal bar 160 can be coupled to a top of the vertical supports 162, above the line busbar 152, such as for storage and/or shipping. If, in a particular installation or implementation for example, the cables are to enter the cabinet 110 from the bottom, the horizontal bar 160 can remain coupled to the top of the vertical supports 162. If, however, in a particular installation for example, the cables are to enter the cabinet 110 from the top, the horizontal bar 160 can be uncoupled from the vertical supports 162 and coupled to a bottom of the vertical supports 162, below the line busbar 152. The reverse is also possible, i.e., the horizontal bar 160 can be coupled to a bottom of the vertical supports 162, such as for storage and/or shipping, and then moved to the top if desired for a particular installation.

In at least one embodiment, the vertical supports 162 can selectively receive the horizontal bar 160 at the top of the vertical supports 162 at a first angle and/or selectively receive the horizontal bar 160 at the bottom of the vertical supports 162 at a second angle. In at least one embodiment, the second angle can be a mirrored angle, or reflection, of the first angle. For example, in at least one embodiment, the vertical supports 162 can be vertically coupled to the cabinet 110, at or near a rear of the cabinet 110, and receive the horizontal bar 160 at the top and/or the bottom of the vertical supports 162, at an angle forward of vertical. In at least one embodiment, the angle can be from 10 to 60 degrees, such as 30 degrees, and/or can bias one or more neutral cables, coupled to the horizontal bar 160, towards the rear of the cabinet 110.

In at least one embodiment, the ground busbar 164 can selectively couple one or more incoming ground cables to the cabinet 110 and/or each other. In at least one embodiment, the ground busbar 164 can be or include one or more frames 166 supporting one or more of the breakers 120, such as the main breakers 122, 124, 126, 128. In at least one embodiment, a frame 166 can be disposed around each of the main breakers 122, 124, 126, 128. In at least one embodiment, each frame 166 can have a ground busbar 164 coupled thereto (which can include being formed integrally therewith). In at least one embodiment, each frame 166 and/or each ground busbar 164 can be coupled to one another and/or to the cabinet 110. In at least one embodiment, the ground busbar 164 can be or include other structure coupled to the cabinet 110.

In at least one embodiment, a power distribution panel according to the disclosure can include a cabinet, two or more breakers at least partially disposed within the cabinet, one or more busbars at least partially disposed within the cabinet, or any combination thereof. In at least one embodiment, the busbars can include one or more line busbars, one or more neutral busbars, one or more ground busbars, or any combination thereof. In at least one embodiment, the breakers can be selectively coupled to each other and/or selectively isolated from each other.

In at least one embodiment, the breakers can include one or more main breakers coupled to the one or more line busbars. For example, in at least one embodiment, the breakers can include a first main breaker and a second main breaker, either or both of which can be coupled to the one or more line busbars. In at least one embodiment, the first main breaker and/or the second main breaker can be disposed above or below the one or more line busbars. In at least one embodiment, the breakers can include a first main breaker coupled to and/or disposed above the one or more line busbars and a second main breaker coupled to and/or disposed above the one or more line busbars. In at least one embodiment, the second main breaker can be vertically level with and/or horizontally offset from the first main breaker.

In at least one embodiment, the one or more line busbars can be or include a single bar electrically coupled to both the first main breaker and the second main breaker. In at least one embodiment, the one or more line busbars can be or include a first bar and a second bar. In at least one embodiment, the bars can be electrically isolated from each other. In at least one embodiment, the first bar can be electrically coupled to the first main breaker. In at least one embodiment, the second bar can be electrically coupled to the second main breaker. In at least one embodiment, a shield can be disposed between the first bar and the second bar and/or can electrically isolate the first bar from the second bar.

In at least one embodiment, the one or more line busbars can be or include three bars electrically isolated from each other, such as one for each of three phases. In at least one embodiment, each bar can be electrically coupled to both the first main breaker and the second main breaker.

In at least one embodiment, the one or more line busbars can be or include a first set of bars and a second set of bars. In at least one embodiment, each set of bars can be or include three bars electrically isolated from each other, such as one for each of three phases. In at least one embodiment, the first set of bars can be electrically coupled to the first main breaker. In at least one embodiment, the second set of bars can be electrically coupled to the second main breaker. In at least one embodiment, a shield can be disposed between the first set of bars and the second set of bars and/or can electrically isolate the first set of bars from the second set of bars.

In at least one embodiment, the one or more line busbars can be or include a single long bar (such as in the case of a single phase system) for selectively coupling to both the first main breaker and the second main breaker, a first short bar for selectively coupling to the first main breaker, a second short bar for selectively coupling to the second main breaker, or any combination thereof. In at least one embodiment, the one or more line busbars can be or include three long bars (such as in the case of a three phase system) for selectively coupling to both the first main breaker and the second main breaker, a first set of short bars for selectively coupling to the first main breaker, a second set of short bars for selectively coupling to the second main breaker, or any combination thereof. In at least one embodiment, the short bars can be electrically isolated from each other. In at least one embodiment, a shield can be disposed between the short bars and/or can electrically isolate the short bars from each other.

In at least one embodiment, the long bar(s) can be coupled to both the first main breaker and the second main breaker, such as for storage and/or shipping. If, in a particular installation for example, the first and second main breakers are to be electrically coupled, the long bar(s) can remain coupled to both. If, however, in a particular installation for example, the first and second main breakers are to be isolated, the long bar(s) can be uncoupled from the first main breaker and the second main breaker and replaced with the first short bar coupled to the first main breaker and the second short bar coupled to the second main breaker. The reverse is also possible, i.e., the short bars can be coupled with the first main breaker and the second main breaker, such as for storage and/or shipping, and replaced with the long bar(s) if desired for a particular installation.

In at least one embodiment, the breakers can include a third main breaker coupled to and/or disposed below the one or more line busbar. In at least one embodiment, the breakers can include a fourth main breaker coupled to and/or disposed below the one or more line busbar. In at least one embodiment, the fourth main breaker can be vertically level with and/or horizontally offset from the third main breaker. In at least one embodiment, the third main breaker can be electrically coupled to the first main breaker. In at least one embodiment, the fourth main breaker can be electrically coupled to the second main breaker.

In at least one embodiment, the breakers can include one or more distribution breakers coupled to the main breakers. In at least one embodiment, the breakers can include a first plurality of distribution breakers coupled to and/or disposed above the first main breaker, a second plurality of distribution breakers coupled to and/or disposed above the second main breaker, a third plurality of distribution breakers coupled to and/or disposed below the third main breaker, a fourth plurality of distribution breakers coupled to and/or disposed below the fourth main breaker, or any combination thereof.

In at least one embodiment, the one or more line busbars can be or include three bars electrically isolated from each other, such as one for each of three phases. In at least one embodiment, each bar can be electrically coupled to the first main breaker, the second main breaker, the third main breaker, the fourth main breaker, or any combination thereof.

In at least one embodiment, the one or more line busbars can be or include a first set of bars and a second set of bars. In at least one embodiment, each set of bars can be or include three bars electrically isolated from each other, such as one for each of three phases. In at least one embodiment, the first set of bars can be electrically coupled to the first main breaker and the third main breaker. In at least one embodiment, the second set of bars can be electrically coupled to the second main breaker and the fourth main breaker. In at least one embodiment, a shield can be disposed between the first set of bars and the second set of bars and/or can electrically isolate the first set of bars from the second set of bars.

In at least one embodiment, a power distribution panel can include a cabinet, a first breaker disposed within the cabinet, a second breaker disposed within the cabinet, a first busbar configured to selectively couple the first breaker and the second breaker in electrical communication with one another, and a second busbar configured to be selectively coupled to either the first breaker or the second breaker. The first busbar and the second busbar can be arranged to be selectively and alternatively installed into the cabinet. In at least one embodiment, a power distribution panel can include a third busbar arranged to be coupled to one of the first breaker and the second breaker, such as when the second busbar is coupled to the other of the first breaker and the second breaker. In at least one embodiment, a power distribution panel can include a shield arranged to be disposed at least partially within the cabinet with at least a portion of the shield disposed between the second busbar and the third busbar. In at least one embodiment, at least a portion of the shield can be an insulator.

Also disclosed are the following numbered items:
1. A power distribution panel comprising:
   a cabinet;
   a first breaker disposed within the cabinet;
   a second breaker disposed within the cabinet;
   a first busbar configured to selectively couple the first breaker and the second breaker in electrical communication with one another; and
   a second busbar configured to be selectively coupled to either the first breaker or the second breaker;
   wherein the first busbar and the second busbar are configured to be selectively and alternatively installed into the cabinet.
2. The power distribution panel as set forth in item 1, further comprising a third busbar configured to be coupled to one of the first breaker and the second breaker when the second busbar is coupled to the other of the first breaker and the second breaker.
3. The power distribution panel as set forth in item 2, further comprising a shield configured to be disposed at least partially within the cabinet with at least a portion of the shield disposed between the second busbar and the third busbar.
4. The power distribution panel as set forth in item 3, wherein at least a portion of the shield is an insulator.

Other and further embodiments utilizing one or more aspects of the disclosure can be devised without departing from the Applicant's disclosure. For example, the devices, systems and methods can be implemented for numerous different types and sizes in numerous different industries. Further, the various methods and embodiments of the devices, systems and methods can be included in combination with each other to produce variations of the disclosed methods and embodiments. Discussion of singular elements can include plural elements and vice versa. The order of steps can occur in a variety of sequences unless otherwise specifically limited. The various steps described herein can be combined with other steps, interlineated with the stated steps, and/or split into multiple steps. Similarly, elements have been described functionally and can be embodied as separate components or can be combined into components having multiple functions.

The inventions have been described in the context of preferred and other embodiments and not every embodiment of the inventions has been described. Obvious modifications and alterations to the described embodiments are available to those of ordinary skill in the art having the benefits of the present disclosure. The disclosed and undisclosed embodiments are not intended to limit or restrict the scope or applicability of the inventions conceived of by the Applicant, but rather, in conformity with the patent laws, Applicant intends to fully protect all such modifications and improvements that come within the scope of the following claims.

## Claims

1. A power distribution panel (100) comprising:
a cabinet (110);
a first breaker (120) disposed within the cabinet;
a second breaker (120) disposed within the cabinet;
at least one line busbar (152) disposed within the cabinet;
at least one neutral busbar (158) disposed within the cabinet; and
at least one ground busbar (164) disposed within the cabinet,
wherein the breakers are configured to be selectively coupled to each other; and
wherein the breakers are configured to be selectively isolated from each other.

2. The power distribution panel as set forth in claim 1, wherein the first breaker includes a first main breaker (122) coupled to and disposed above the at least one line busbar; and wherein the second breaker includes a second main breaker (124) coupled to and disposed above the at least one line busbar.

3. The power distribution panel as set forth in claim 2, wherein the second main breaker is vertically level with and horizontally offset from the first main breaker.

4. The power distribution panel as set forth in claim 2 or 3, wherein the at least one line busbar comprises a single bar (156) electrically coupled to both the first main breaker and the second main breaker.

5. The power distribution panel as set forth in any of claims 2 to 4, wherein the at least one line busbar comprises a first bar (156) and a second bar (156); wherein the first bar and the second bar are electrically isolated from each other; wherein the first bar is electrically coupled to the first main breaker; and wherein the second bar is electrically coupled to the second main breaker.

6. The power distribution panel as set forth in any of claims 2 to 5, wherein the at least one line busbar comprises three bars (154) electrically isolated from each other; and wherein each of the three bars is electrically coupled to both the first main breaker and the second main breaker.

7. The power distribution panel as set forth in any of claims 2 to 6, wherein the at least one line busbar comprises a first set of bars (156) and a second set of bars (156); wherein the first set of bars and the second set of bars are electrically isolated from each other; wherein the first set of bars is electrically coupled to the first main breaker; and wherein the second set of bars is electrically coupled to the second main breaker.

8. The power distribution panel as set forth in any of claims 2 to 7, further comprising a third main breaker (126) coupled to and disposed below the at least one line busbar and a fourth main breaker (128) coupled to and disposed below the at least one line busbar.

9. The power distribution panel as set forth in claim 8, wherein the fourth main breaker is vertically level with and horizontally offset from the third main breaker.

10. The power distribution panel as set forth in claim 8 or 9, wherein the third main breaker is electrically coupled to the first main breaker and the fourth main breaker is electrically coupled to the second main breaker.

11. The power distribution panel as set forth in any of claims 8 to 10, wherein the at least one line busbar comprises three bars electrically isolated from each other; and wherein each of the three bars is electrically coupled to the first main breaker, the second main breaker, the third main breaker, and the fourth main breaker.

12. The power distribution panel as set forth in any of claims 8 to 11, wherein the at least one line busbar comprises a first set of bars and a second set of bars; wherein the first set of bars and the second set of bars are electrically isolated from each other; wherein the first set of bars is electrically coupled to the first main breaker and the third main breaker; and wherein the second set of bars is electrically coupled to the second main breaker and the fourth main breaker, and optionally, further comprising a shield (170) electrically isolating the first set of bars from the second set of bars.

13. The power distribution panel as set forth in any of claims 2 to 8, wherein the at least one line busbar includes a single long bar (154) configured to be selectively coupled to both the first main breaker and the second main breaker, a first short bar (156) configured to be selectively coupled to the first main breaker, and a second short bar (156) configured to be selectively coupled to the second main breaker; and wherein the first and second short bars are configured to be electrically isolated from each other.

14. The power distribution panel as set forth in claim 13, further comprising a shield that is configured to selectively electrically isolate the first short bar from the second short bar.

15. The power distribution panel as set forth in claim 13 or 14, wherein the single long bar is configured to be:
selectively coupled to both the first main breaker and the second main breaker;
selectively uncoupled from the first main breaker and the second main breaker; and
selectively replaced with the first short bar and the second short bar.
